# EUROPÄISCHE PATENTSCHRIFT

(11) **EP 1 162 028 B1**
(45) Veröffentlichungstag und Bekanntmachung des Hinweises auf die Patenterteilung: **01.09.2004**
(21) Anmeldenummer: 00890190.2
(22) Anmeldetag: 09.06.2000
(51) Int. Cl.: B23Q 7/02, B65G 47/84

(54) **Magazin für längliche Werkstücke**
Magazine for elongated workpieces
Entrepôt pour des pièces de travail allongées

(43) Veröffentlichungstag der Anmeldung: 12.12.2001
(73) Patentinhaber: Filzmoser, Franz, 4609 Thalheim (AT)
(72) Erfinder: Filzmoser, Franz, 4609 Thalheim (AT)
(74) Vertreter: Hübscher, Helmut, Dipl.-Ing.

(56) Entgegenhaltungen:
- DE-A- 3 000 354
- FR-A- 1 316 672
- US-A- 5 062 523
- PATENT ABSTRACTS OF JAPAN vol. 009, no. 179 (M-399), 24. Juli 1985 (1985-07-24) & JP 60 048201 A (KOIKEGOMU KK), 15. März 1985 (1985-03-15)

## Beschreibung

Die Erfindung bezieht sich auf ein Magazin für längliche Werkstücke, insbesondere Drahtstäbe, mit wenigstens einem Aufnahmefach zum Einlegen eines Werkstükkes, wobei eine horizontale, eine Mehrzahl voneinander beabstandeter Magazinscheiben mit jeweils wenigstens einer umfangseitigen Ausnehmung tragende, Magazinwelle vorgesehen ist, wobei die miteinander fluchtenden Ausnehmungen der Magazinscheiben die Aufnahmefächer bilden und die Magazinwelle von einer Übemahmestellung mit einem sich aufwärts öffnenden Aufnahmefach in eine Abgabestellung mit einem sich abwärts öffnenden Aufnahmefach drehbar ist (FR 1 316 672 A).

Diese Magazine dienen zur Werkstückzwischenlagerung zwischen einer Vorfertigung der Werkstücke und deren Weiterverarbeitung, zur Übergabe der Werkstücke von einer Vorfertigungseinrichtung an eine Weiterverarbeitungseinrichtung, beispielsweise bei der Betonstahlherstellung zur Übernahme der durch eine Richt- und Schneidanlage vorbereiteten Drahtstäbe und dann zu deren Weitergabe an eine Verlegeeinrichtung oder zum leiten der Werkstücke durch ein Veredelungsbad (FR 1 316 672 A). Als Magazine sind dazu bisher auch Kettenmagazine oder Klappenmagazine im Einsatz, welche Magazine mit einem beträchtlichen Bauaufwand verbunden sind, wegen ihres Konstruktionskonzeptes von vornherein für ganz bestimmte Aufstell- und Funktionsbedingungen ausgelegt werden müssen, auf Grund des einheitlichen Antriebskonzeptes keine Pufferwirkung mit sich bringen und zudem meist mit einem pneumatischen Antrieb ausgestattet sind.

Der Erfindung liegt daher die Aufgabe zugrunde, ein Magazin der eingangs geschilderten Art zu schaffen, das sich bei verhältnismäßig aufwandsarmer Konstruktion durch seine Anpaßbarkeit auszeichnet, energiesparsam und lärmarm arbeitet und die Voraussetzung für einen Pufferbetrieb bietet.

Die Erfindung löst diese Aufgabe dadurch, daß wenigstens zwei Magazinwellen, die eine Mehrzahl voneinander beabstandeter Magazinscheiben tragen, vorgesehen sind, wobei jede Magazinwelle zwecks Übergabe übemommener Werkstücke an die jeweils nachgeordnete Magazinwelle von der Übernahmestellung mit sich aufwärts öffnendem Aufnahmefach einzeln in die Abgabestellung mit sich abwärts öffnendem Aufnahmefach antreibbar ist.

Die Magazinwellen mit ihren Magazinscheiben lassen sich ohne Schwierigkeiten mit einem elektrischen Getriebemotor antreiben, was einen leisen und sparsamen Betrieb gewährleistet, und können entsprechend der Zahl und Anordnung der Magazinscheiben bestens auf die aufzunehmenden Werkstücke abgestimmt werden, die jeweils in der Übernahmestellung in das sich aufwärts öffnende Aufnahmefach fallen oder eingelegt werden und hier eine optimale Auflage finden. Die Magazinscheiben können ein, vorzugsweise zwei oder mehr Ausnehmungen aufweisen, so daß pro Magazinwelle ein, zwei oder mehrere Aufnahmefächer entstehen, wobei der Antrieb der Wellen in Winkelschritten erfolgt, deren Größe von der Anzahl der gleichmäßig um den Umfang der Magazinscheiben verteilten Aufnahmefächer und bei mehreren Magazinwellen von der Teilung zwischen den Scheibenachsen abhängt. Da das Magazin zwei oder mehr Magazinwellen umfaßt, kommt es zu einer entsprechenden Steigerung der Aufnahmekapazität, wobei die einzeln antreibbaren Magazinwellen die übemommenen Werkstücke jeweils an die nachfolgenden Magazinwellen bis zur Auffüllung deren Aufnahmefächer weitergeben, so daß auch ein wirkungsvoller Pufferbetrieb möglich ist. Die von der ersten Magazinwelle übernommenen Werkstücke wandern durch die Aufnahmefächer der hintereinandergereihten Magazinwellen und werden schließlich von der letzten Magazinwelle einer Verlegeeinrichtung, einem Robotersystem, einem Kettenmagazin od. dgl. für eine Weiterverarbeitung übergeben.

Nach einer zweckmäßigen Ausgestaltung der Erfindung sind die Wellen auf einem schrägen, vorzugsweise um eine wellenparallele Schwenkachse schwenkverstellbaren Rahmen mit einem gegenseitigen, gegenüber dem Magazinscheibenradius größeren, aber gegenüber dem Magazinscheibendurchmesser kleineren Abstand gelagert und bilden die von Welle zu Welle gegeneinander axial versetzten Magazinscheiben in Antriebsrichtung jeweils hinter ihren Ausnehmungen eine die Ausnehmungen auswärts erweiternde und in die Ausnehmungen hineinführende Anlaufschräge. Die auf Grund des Rahmens der Höhe nach gegeneinander versetzt angeordneten Magazinwellen erlauben entsprechend der Rahmenschräge die Überbrückung verschiedener Zwischenbereiche zwischen einer Vorfertigungseinrichtung und einer Weiterverarbeitungseinrichtung, so daß das Magazin in unterschiedlichen Anlagen bestens integriert werden kann. Durch die geeignet beabstandeten Magazinwellen überlappen sich die Magazinscheiben der benachbarten Wellen, so daß bei einer Relativverdrehung dieser Scheiben die in den Aufnahmefächem der einen Scheiben liegenden Werkstücke ordnungsgemäß den Aufnahmefächem der anderen Scheiben übergeben werden, wobei die den Ausnehmungen zugehörenden Anlaufschrägen für eine sichere Werkstückübernahme sorgen. Da die Magazinwellen einzeln antreibbar sind, können die Werkstücke bedarfsweise von oben nach unten den Aufnahmefächem der einzelnen Magazinscheiben übergeben werden, was je nach Anzahl der zu übernehmenden Werkstücke bzw. der Anzahl der abzugebenden Werkstücke die Aufnahmefächer der Reihe nach aufzufüllen oder zu entleeren erlaubt und einen funktionsicheren Pufferbetrieb ermöglicht.

Ist die oberste Magazinwelle wahlweise gegensinnig zur üblichen Antriebsrichtung in eine Abwurfstellung rückverdrehbar, können einzelne Werkstücke auf kurzem Wege dem Magazin wieder entnommen und über die Abwurfstellung einer separaten Weiterbearbeitung zugeführt werden, so daß sich auch einzelne Werkstücke, beispielsweise für eine Einzelbehandlung oder Einzelverarbeitung gezielt aussortieren lassen.

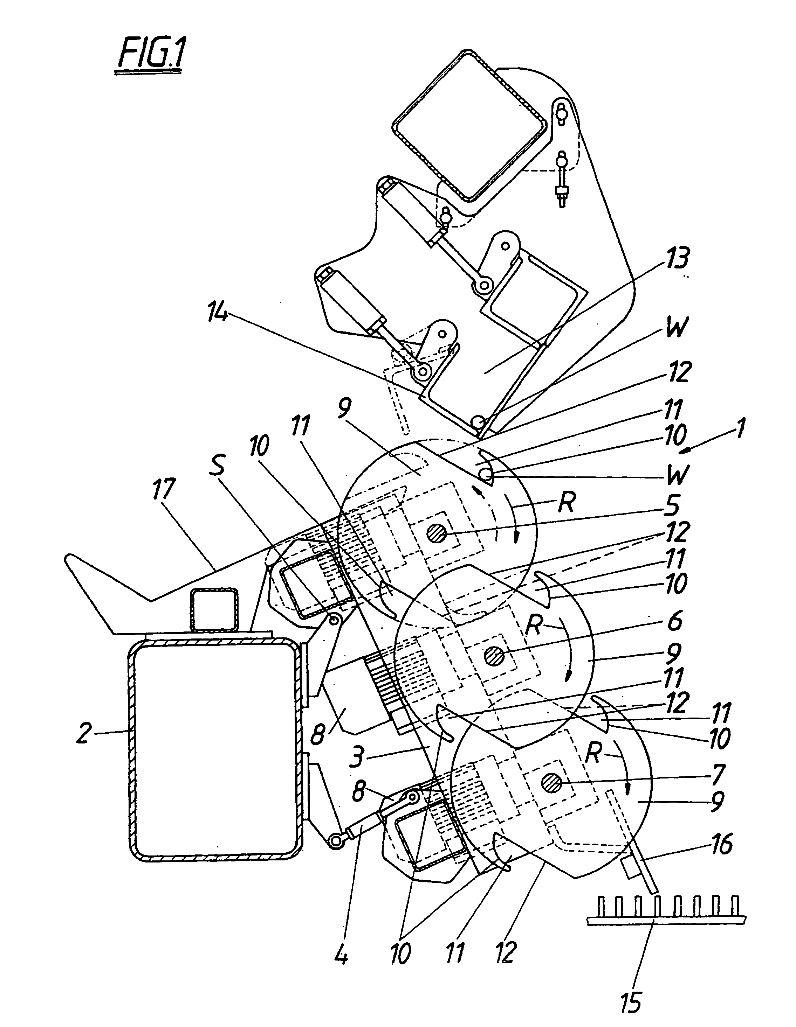

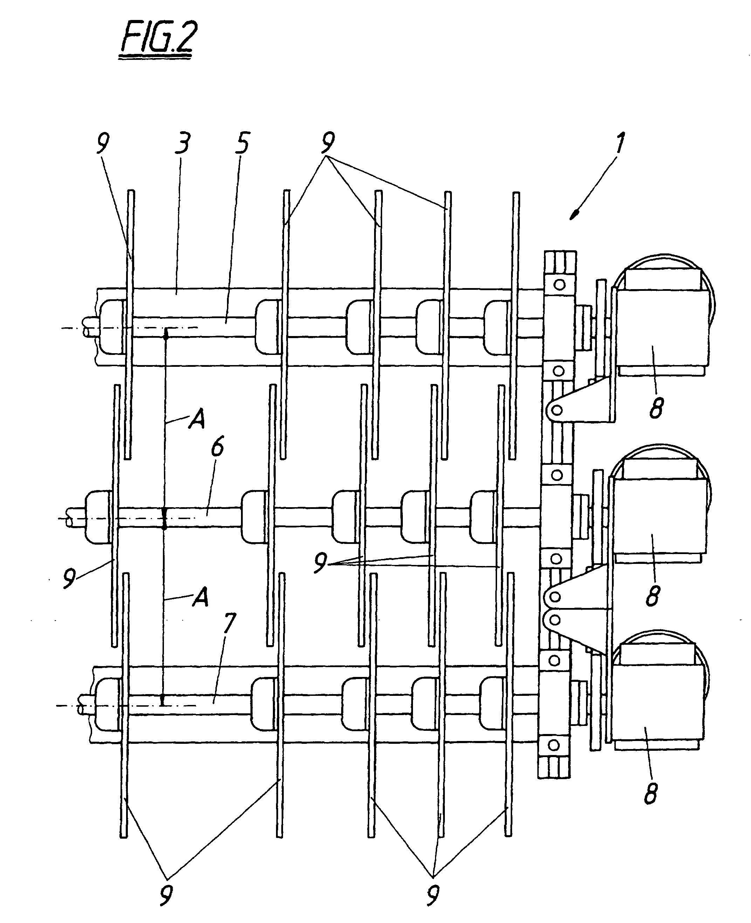

In der Zeichnung ist der Erfindungsgegenstand beispielsweise veranschaulicht, und zwar zeigen
Fig. 1 und 2 einen Teil eines erfindungsgemäßen Magazins in teilgeschnittener Seitenansicht bzw. in Vorderansicht.

Ein Magazin 1 für längliche Werkstücke W, insbesondere Drahtstücke, besteht aus einem durch einen Horizontalträger 2 angedeuteten Gestell, an dem sich ein Magazinrahmen 3 über einen Stelltrieb 4 um eine horizontale Schwenkachse S schwenkverstellbar abstützt. Auf dem Magazinrahmen 3 sind untereinander drei Magazinwellen 5, 6, 7 gelagert und über elektrische Getriebemotore 8 einzeln antreibbar. Auf den Magazinwellen 5, 6, 7 sitzt drehfest eine Mehrzahl voneinander beabstandeter und von Welle zu Welle gegeneinander axial versetzter Magazinscheiben 9, die jeweils zwei diametral einander gegenüberliegende umfangseitige Ausnehmung 10 bilden, welche miteinander fluchtenden Ausnehmungen 10 der Magazinscheiben 9 als Aufnahmefächer 11 zum Einlegen der Werkstücke W dienen. Die Magazinwellen 5, 6, 7 sind so mit gegenseitigem Abstand A angeordnet, daß sich die Magazinscheiben 9 der benachbarten Magazinwellen überlappen und bei einer Relatiwerdrehung der Magazinscheiben 9 in Antriebsrichtung R die Werkstücke W aus einem Aufnahmefach 11 einer oberen Magazinwelle in ein Aufnahmefach 11 der Magazinscheiben 9 einer benachbarten unteren Welle übergeben werden. Um dieses Übergeben der Werkstücke zu erleichtern, sind die Ausnehmungen 10 der Magazinscheiben 9 durch eine in Antriebsrichtung R hinter den Ausnehmungen vorgesehene und in die Ausnehmung hineinführende Anlaufschräge 12 auswärts erweitert, so daß beim Relativverdrehen der Magazinscheiben benachbarter Magazinwellen die Anlaufflächen 12 der unteren Magazinscheiben die Werkstücke aus den Aufnahmefächem der oberen Magazinwelle herausbewegen und in die zugehörigen unteren Aufnahmefächer gleiten lassen.

Das Magazin 1 ist unterhalb einer mit ihrer Auslaufrinne 13 angedeuteten Drahtricht- und -schneidanlage angeordnet, so daß ein gerade gerichteter und entsprechend abgelängter Drahtstab, der in die Auslaufrinne 13 produziert wurde, durch das Öffnen einer Auswurfklappe 14 freigegeben wird und in ein sich in Übernahmestellung befindendes Aufnahmefach 11 der oberen Magazinwelle 5 fällt. Sobald die zweite Magazinwelle 6 frei ist, wird die obere Magazinwelle 5 um einen Winkelschritt von 180° in die Abgabestellung mit einem abwärts sich öffnenden Aufnahmefach gedreht und damit das Werkstück dem sich in Übernahmestellung befindenden Aufnahmefach 11 der mittleren Magazinwelle 6 übergeben. Dieser Vorgang kann wiederholt werden, bis alle Aufnahmefächer der Magazinwellen aufgefüllt sind, wobei aber vorteilhafterweise die Magazinwellen unabhängig voneinander befüllt oder entleert werden können. Von der letzten Magazinwelle 7 lassen sich dann die Werkstücke durch Verdrehen in die Abgabestellung einer nur angedeuteten Verlegeeinrichtung 15 übergeben, welche Übergabe durch Abgleitführungen 16 erleichtert wird.

Der obersten Magazinwelle 5 und deren Magazinscheiben 9 ist eine zusätzliche Abnahmevorrichtung 17 zugeordnet und die obere Magazinwelle 5 kann auch wahlweise gegensinnig zur üblichen Antriebsrichtung R in eine Abwurfstellung (strichpunktierte Darstellung in Fig. 1) rückverdreht werden, in der das Werkstück W direkt der Abnahmevorrichtung 17 zugeleitet wird und so für eine Einzelverarbeitung zur Verfügung steht.

## Patentansprüche

1. Magazin (1) für längliche Werkstücke, insbesondere Drahtstäbe, mit wenigstens einem Aufnahmefach (11) zum Einlegen eines Werkstückes (W), wobei eine horizontale, eine Mehrzahl voneinander beabstandeter Magazinscheiben (9) mit jeweils wenigstens einer umfangseitigen Ausnehmung (10) tragende Magazinwelle (5, 6, 7) vorgesehen ist, wobei die miteinander fluchtenden Ausnehmungen (10) der Magazinscheiben (9) die Aufnahmefächer (11) bilden und die Magazinwelle (5, 6, 7) von einer Übernahmestellung mit einem sich aufwärts öffnenden Aufnahmefach (10) in eine Abgabestellung mit einem sich abwärts öffnenden Aufnahmefach (11) drehbar ist, **dadurch gekennzeichnet, daß** wenigstens zwei Magazinwellen (5, 6, 7), die eine Mehrzahl voneinander beabstandeter Magazinscheiben (9) tragen, vorgesehen sind, wobei jede Magazinwelle (5, 6, 7) zwecks Übergabe übernommener Werkstücke (W) an die jeweils nachgeordnete Magazinwelle (6, 7) von der Übemahmestellung mit sich aufwärts öffnendem Aufnahmefach (11) einzeln in die Abgabestellung mit sich abwärts öffnendem Aufnahmefach (11) antreibbar ist.

2. Magazin nach Anspruch 1 , **dadurch gekennzeichnet, daß** die Wellen (5, 6, 7) auf einem schrägen, vorzugsweise um eine wellenparallele Schwenkachse (S) schwenkverstellbaren Rahmen (3) mit einem gegenseitigen, gegenüber dem Magazinscheibenradius größeren, aber gegenüber dem Magazinscheibendurchmesser kleineren Abstand (A) gelagert sind und die von Welle zu Welle gegeneinander axial versetzten Magazinscheiben (9) in Antriebsrichtung (R) jeweils hinter ihren Ausnehmungen (10) eine die Ausnehmungen auswärts erweiternde und in die Ausnehmungen hineinführende Anlaufschräge (12) bilden.

3. Magazin nach Anspruch 1 oder 2, **dadurch gekennzeichnet, daß** die oberste Magazinwelle (5) wahlweise gegensinnig zur üblichen Antriebsrichtung (R) in eine Abwurfstellung rückverdrehbar ist.

## Claims

1. A magazine (1) for elongate workpieces, particularly wire rods, with at least one reception compartment (11) for the insertion of a workpiece (W), wherein a horizontal magazine shaft (5, 6, 7) is provided which carries a plurality of spaced-apart magazine discs (9) each having a peripheral recess (10), the aligned recesses (10) of the magazine disc (9) forming the reception compartments (11) and the magazine shafts (5, 6) being rotatable from a take-over position with an upwardly opening reception compartment (10) into a delivery position with a downwardly opening reception compartment (11), **characterised in that** at least two magazine shafts (5, 6, 7) carrying a plurality of spaced-apart magazine discs (9) are provided, wherein for the purpose of transfer of taken-over workpieces (W) to the respectively following magazine shaft (6, 7) each magazine shaft (5, 6, 7) is drivable individually from the take-over position with the reception compartment (11) opening upwardly, into the delivery position with the reception compartment (11) opening downwardly.

2. A magazine according to claim 1, **characterised in that** the shafts (5, 6, 7) are mounted on an inclined frame (3) which is preferably pivotable about a shaft-parallel pivot axis (S), said shafts having a mutual spacing (A) which is larger than the magazine disc radius but smaller than the magazine disc diameter, and the magazine discs (9) which are axially offset from one another from one shaft to another respectively form, in the drive direction (R) behind their recesses (10), a ramp (12) which widens the recesses outwardly and leads into the recesses.

3. A magazine according to claim 1 or 2, **characterised in that** the uppermost magazine shaft (5) is adapted to be turned back optionally in the opposite direction to the usual drive direction (R) into an ejection position.

## Revendications

1. Magasin (1) pour des pièces d'oeuvres allongées, en particulier des barres de fil métallique, avec au moins un compartiment de réception (11) pour insérer une pièce d'oeuvre (W), un arbre de magasin (5, 6, 7) horizontal, portant une pluralité de disques de magasin (9) espacés les uns des autres, ayant chacun au moins un évidement (10) du côté périphérie, les évidements (10) alignés les uns les autres des disques de magasin (9) formant les compartiments de réception (11) et l'arbre de magasin (5, 6, 7) étant susceptible d'être entraîné en rotation depuis une position de transfert, avec un compartiment de réception (10) s'ouvrant vers le haut, en une position de délivrance avec un compartiment de réception (11) s'ouvrant vers le bas, **caractérisé en ce qu'**au moins deux arbres de magasin (5, 6, 7), portant une pluralité de disques de magasin (9) espacés les uns des autres, sont prévus, chaque arbre de magasin (5, 6, 7), dans le but d'un transfert de pièces oeuvres (W) prises en charge à l'arbre de magasin (6, 7) chaque fois disposé en aval, étant susceptible d'être entraîné, depuis la position de prise en charge, avec le compartiment de réception (11) s'ouvrant vers le haut, individuellement, à la position de délivrance, avec le compartiment de réception (11) s'ouvrant vers le bas.

2. Magasin selon la revendication 1, **caractérisé en ce que** les arbres (5, 6, 7) sont montés sur un cadre (3) oblique, réglable en pivotement, de préférence autour d'un axe de pivotement (S) parallèle à l'arbre, avec un espacement (A) mutuel, supérieur au rayon du disque de magasin mais inférieur au diamètre de disque de magasin, et les disques de magasin (9), décalés axialement les uns par rapport aux autres d'un arbre à un autre, formant, dans la direction d'entraînement (R), chaque fois derrière leurs évidements (10) un pente de franchissement (12), élargissant les évidements lorsqu'on évolue vers l'extérieur et assurant un guidage de pénétration dans les évidements.

3. Magasin selon la revendication 1 ou 2, **caractérisé en ce que** l'arbre de magasin (5) le plus haut est susceptible d'être ramené, par rotation, en une position d'éjection au choix, en sens inverse par rapport au sens d'entraînement (R) usuel.
